# EUROPEAN PATENT APPLICATION

(11) **EP 4 131 127 A1**
(43) Date of publication of application: **08.02.2023**
(21) Application number: 20927869.6
(22) Date of filing: 27.03.2020
(51) Int. Cl.: G06Q 50/06

(54) **FUEL TRADING COORDINATION DEVICE AND FUEL TRADING COORDINATION SYSTEM**

(71) Applicant: Hitachi, Ltd., Tokyo 100-8280 (JP)
(72) Inventor: NAITO, Hiroto, Tokyo 100-8280 (JP); SHIRAKAWA, Yuzo, Tokyo 100-8280 (JP); HASEGAWA, Hiroaki, Tokyo 100-8280 (JP)
(74) Representative: Mewburn Ellis LLP
(86) International application number: PCT/JP2020/013928
(87) International publication number: WO 2021/192205

(57) **Abstract**

The present disclosure provides a fuel trading coordination technique that enables certification processes taking account of a supply chain for a fuel, such as hydrogen, and that meets fuel users' demands while ensuring their convenience. A fuel trading coordination device according to the present disclosure includes a storage device storing information of a plurality of fuel suppliers, and a controller that processes an order for purchasing a mix of a first type fuel and a second type fuel, the order being placed by a first type fuel user. The first type fuel and the second type fuel are fuels that are different in production method but can be used for the same purpose. The controller sends information of the order of the first type fuel user to a first supplier that supplies the first type fuel and to a second supplier that supplies the second type fuel.

## Description

### Technical Field

The present disclosure relates to a fuel trading coordination device and a fuel trading coordination system.

### Background Art

There are various types of fuels, among which hydrogen is a fuel receiving a lot of attention. Hydrogen can be produced from various energy sources, and the cost, amount, and energy-policy-related significance of hydrogen vary, depending on production methods.

Besides, the current situation concerning a hydrogen supply chain involves a mix of various techniques for hydrogen manufacturing methods and hydrogen storage/transport methods. A process of standardizing a variety of techniques is now in progress, but is still at its organizing stage and a concrete result is yet to be achieved.

If a hydrogen supply chain is established in the future, the user would see hydrogen, the final product, as just hydrogen whatever a manufacturing method for hydrogen may be. However, the type of a supply chain route through which hydrogen has been distributed greatly affects the environmental value and economic value of hydrogen. It will be necessary in the future, therefore, that the environmental value (CO₂ emission in production, transportation, and the like) and economic value (production/transportation costs, and the like) of hydrogen be evaluated, and a hydrogen trading market be established based on the evaluation.

In this connection, a certification project have already been launched in Europe in efforts for establishing a hydrogen trading market. In this project, the environmental value of hydrogen is defined in three categories, that is, Green hydrogen, Low Carbon hydrogen, and Gray hydrogen, based on CO₂ emission intensity. Gray hydrogen is, for example, natural gas reformed hydrogen, which is produced from a fossil fuel as a raw material. Its CO₂ emission intensity is therefore high, because of which its environmental value is evaluated to be low. Green hydrogen (e.g., hydrogen produced by electrolyzing water using electricity generated by renewable power generation, such as wind power generation or solar power generation) and Low Carbon hydrogen (e.g., hydrogen produced by electrolyzing water using electricity from power generation systems), on the other hand, show low CO₂ emission intensity, and are therefore evaluated to be low in environmental value. These types of hydrogen, however, require higher equipment/production costs and therefore tend to be more expensive than Gary hydrogen.

### Citation List

### Non-Patent Literature

NPL 1: "Production, Transportation, and Storage of Hydrogen" Natural Resources and Energy Agency, Fuel Cell Promotion Dept., April 14, 2014

### Summary of Invention

### Technical Problem

However, the European project does not involve a discussion on the hydrogen supply chain. It is therefore necessary for the hydrogen user to properly evaluate and certify the value of hydrogen including transportation means used.

Besides, the European project focuses on certification of hydrogen producers, which has created a situation where a possibility of an illegal act by a hydrogen producer having been certified, such as selling Gary hydrogen disguised as Green hydrogen, cannot be denied.

Furthermore, from the hydrogen user's perspective, the European project has other issues to clear. For example, when the hydrogen user currently purchases only Green hydrogen due to problems with storage facilities, etc., the hydrogen user has no option but to purchase hydrogen from a Green hydrogen producer. In such a case, the European project fails to meet the hydrogen user's demand for purchasing a mix of Green hydrogen and Gary hydrogen in consideration of an economic value added. In the current situation, the project also fails to meet the hydrogen user's another demand that the user's contribution to the environment be made even if the economic value added is lowered (even if the cost of hydrogen rises). Leaving such a situation as it is will lead to a failure in ensuring convenience of the hydrogen user and in providing support to corporate efforts for making contributions to the environment.

The present disclosure provides a technique that has been conceived in view of the above circumstances, the technique being a fuel trading coordination technique that enables certification processes taking account of a supply chain for a fuel, such as hydrogen, and that meets fuel users' demands while ensuring their convenience.

### Solution to Problem

In order to solve the above problem, the present disclosure provides a fuel trading coordination device including: a storage device that stores information of a plurality of fuel suppliers; and a controller that processes an order for purchasing a mix of a first type fuel and a second type fuel, the order being placed by a first type fuel user. In the fuel trading coordination device, the first type fuel and the second type fuel are fuels that are different in production method but can be used for the same purpose, and the controller transmits information of the order of the first type fuel user to a first supplier that supplies the first type fuel and to a second supplier that supplies the second type fuel.

Other features related to the present disclosure will be made clear from the descriptive contents of this specification and the accompanying drawings. Aspects of the present disclosure are achieved by elements, various combinations of elements, detailed descriptions below, and appended claims.

It should be understood that the description herein is merely exemplary and that the description does not limit the scope of the claims or applications of the present disclosure by any means.

### Advantageous Effects of Invention

The fuel trading coordination technique of the present disclosure enables certification processes taking account of a fuel supply chain and meets fuel users' demands while ensuring their convenience.

### Brief Description of Drawings

FIG. 1 depicts a schematic configuration example of a hydrogen trading coordination system 10 according to an embodiment.
FIG. 2 depicts a configuration example of hydrogen management information 200 held (managed) in a storage device (not illustrated) of a hydrogen trading coordination device 100.
FIG. 3 is a flowchart for explaining the details of a hydrogen trading coordination process executed by the hydrogen trading coordination system 10.

### Description of Embodiments

Embodiments of the present disclosure will now be described with reference to the drawings. In the accompanying drawings, elements that are functionally the same may be denoted by the same numbers. It should be noted that the accompanying drawings, which illustrate specific embodiments and implementation examples conforming to the principles of the present disclosure, are for understanding of the present disclosure and are by no means used for limited interpretation of the present disclosure.

While an embodiment of the present disclosure is explained in detail sufficiently enough to allow those skilled in the art to implement the present disclosure, the present disclosure may be implemented also in other forms and modes. It should be noted that configurations/structures may be changed or various elements may be replaced without departing from the scope and spirit of the technical concept of the present disclosure. The following description, therefore, should not be interpreted as one that places any form of limitation.

The following description of the embodiment, when deemed necessary for convenience, may be made as description of multiple sections or embodiments. It should be noted, however, that unless otherwise specified, the sections or embodiments are not unrelated to each other, and that one section or embodiment is a modification, detailed description, supplementary, or the like, of a part or the whole of another section or embodiment. When a specific number of elements and the like (including a numerical value, an amount, and a range) is mentioned, the number of elements is not limited to that specific number of elements, except a case where the specific number is specified or a case where a logical principle clearly requires limitation to the specific number, and may be larger or smaller than the specific number.

Furthermore, it is obvious that in the following embodiments, constituent elements (including element steps and the like) are not necessarily essential unless otherwise specified or considered to be essential as an obvious conclusion from a logical principle.

The embodiments of the present disclosure may be implemented by software running on a general-purpose computer or by dedicated hardware or a combination of software and hardware.

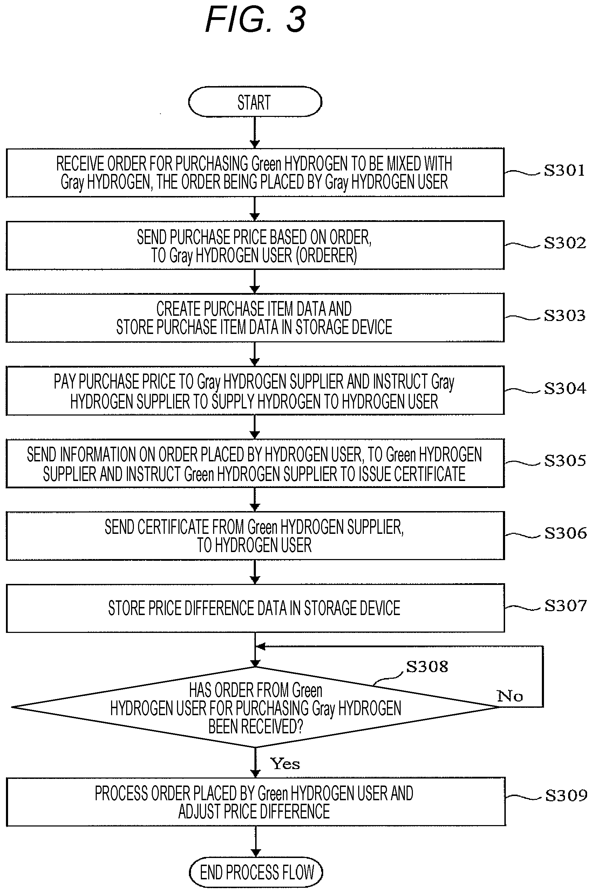

In the following description, pieces of information on the present disclosure will be described in the form of a "table" (see FIG. 3). These pieces of information, however, do not necessarily need to be expressed in a data structure of a table form, and may be expressed in a data structure of a list, a DB, a queue, etc., or other data structures. For this reason, to indicate that information does not depend on the data structure, "table", "list", "DB", "queue", and the like may be simply referred to as "information".

Further, to describe the contents of pieces of information, such expressions as "identification information", "identifier", "title", "name", and "ID" can be used, and these expressions can be replaced with each other.

In an embodiment to be described below, hydrogen will be described as an example of a fuel that a fuel trading coordination system deals with. However, a trading coordination process, which will be described later, can be applied in the same manner to a fuel different from hydrogen.

### <Configuration Example of Hydrogen Trading Coordination System>

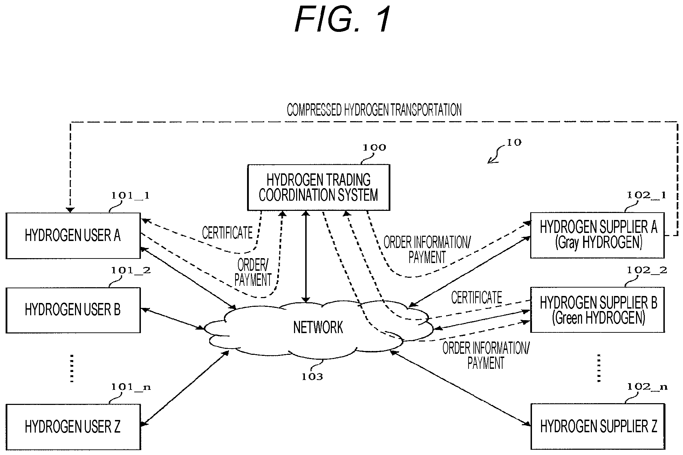

FIG. 1 depicts a schematic configuration example of a hydrogen trading coordination system 10 according to an embodiment. The hydrogen trading coordination system 10 allows a hydrogen user, who usually makes a hydrogen trading with a hydrogen supplier in the form of a one-to-one deal, to make a hydrogen trading with a plurality of suppliers without changing facilities the hydrogen user has.

As shown in FIG. 1, the hydrogen trading coordination system 10 includes a hydrogen trading coordination device 100, terminal devices 101_1 to 101_n (n is any given integer equal to or more than 2) of a plurality of hydrogen users (hydrogen users A to Z), and terminal devices 102_1 to 102_n (n is an any given integer equal to or more than 2) of a plurality of hydrogen suppliers (hydrogen suppliers A to Z), and these device and terminal devices are connected to each other via a network 103. The hydrogen trading coordination device 100, the terminal devices 101_1 to 101_n of the plurality of hydrogen users, and the terminal devices 102_1 to 102_n of the plurality of hydrogen suppliers can each be composed of an ordinary computer (which includes a processor (control unit), a storage device (a memory, an HDD, or the like), a communication device, an input device (a mouse, a keyboard, and the like), and an output device (a display device, an audio output device and the like). The detailed internal configuration of these devices is therefore not described here.

As a situation in which the hydrogen trading coordination system 10 is put into operation, a case is considered where, for example, a hydrogen user A, who normally purchases 20 m³ of Gray hydrogen (production method: natural gas reformation, transportation method: the form of a compressed hydrogen, CO₂ emission intensity: 1.62 kg-CO₂/Nm³-H₂, cost: 10 yen/m³) from the hydrogen supplier A only, purchases Green hydrogen (production method: electrolyzation using power from domestic wind power generators, transportation method: in the form of liquid hydrogen, CO₂ emission intensity: 0.79 kg-CO₂/Nm³-H₂, cost: 20 yen/m³) from a hydrogen supplier B, as a part of a Gray hydrogen/Green hydrogen mixture, thus purchasing a mix of Gray hydrogen of 10 m³ and Green hydrogen of 10 m³. In this case, the hydrogen user A transmits a trading coordination request from the terminal device 101_1 of the hydrogen user A to the hydrogen trading coordination device 100. Forms of the trading coordination request include a form of changing the CO₂ emission intensity, for example, from X to Y (e.g., from 1.62 kg-CO₂/Nm³-H₂ to 1.2 kg-CO₂/Nm³-H₂) and a form of directly specifying an amount of Gray hydrogen and of Green hydrogen (e.g., 10 m³ of Gray hydrogen and 10 m³ of Green hydrogen).

Upon receiving the trading coordination request from the hydrogen user A, the hydrogen trading coordination device 100 calculates a trading amount of each type of hydrogen (calculating a trading amount of each type of hydrogen when a request for changing the CO₂ emission intensity is made) and a trading price of the same, and at the same time, transmits order information on an order for Green hydrogen to at least one of Green hydrogen suppliers (e.g., the terminal device 102_2 of a supplier B). Upon receiving the order information, the Green hydrogen supplier (e.g., the terminal device 102_2 of the supplier B) automatically creates a Green hydrogen purchase certificate, based on the order information, (creates the certificate by, for example, entering necessary information, such as a date, the type of hydrogen, a trading amount, a purchaser, and a price, in a prescribed certificate format and attaching signature data or stamp data on the Green hydrogen supplier to the format), and transmits the Green hydrogen purchase certificate to the hydrogen trading coordination device 100.

In addition to transmitting the order information on the order for Green hydrogen to at least one of Green hydrogen suppliers (e.g., the terminal device 102_2 of the supplier B), the hydrogen trading coordination device 100 transmits also order information on the hydrogen user A's order (a required amount of hydrogen: e.g., 20 m³, an amount of Gray hydrogen after trading coordination: e.g., 10 m³, and a price after trading coordination (actual payment): e.g., 100 yen) to one of the Gray hydrogen suppliers (e.g., the terminal device 102_1 of the supplier B from which the hydrogen user A has been purchasing hydrogen). Now the hydrogen supplier A supplies the hydrogen user A (orderer) with 20 m³ of Grey hydrogen, but actually receives a payment for 10 m³ of Grey hydrogen.

When receiving the order information, the hydrogen supplier A transports hydrogen (compressed hydrogen) in an amount required by the hydrogen user A (20 m³ in the above case) by a physical transportation means, to a hydrogen storage facility of the hydrogen user A. After all, this is a transaction in which the hydrogen user A has purchased 20 m³ of hydrogen at a higher price (15 yen/m³). It is nevertheless an undeniable fact that the hydrogen user A has succeeded in reducing the CO₂ emission intensity to 1.21 kg-CO₂/Nm³-H₂ (succeeded in improving the environmental value).

When the above hydrogen trading coordination is carried out by the hydrogen trading coordination system 10, a difference (e.g., 200 yen) between the amount of payment (e.g., 300 yen) from the hydrogen user (hydrogen user A), who has placed the order for purchasing a mix of different types of hydrogen, to the hydrogen trading coordination device 100 and the amount of payment (e.g., 100 yen) to the hydrogen supplier (hydrogen supplier A) who is the Gray hydrogen supplier is pooled by the hydrogen trading coordination device 100. Afterward, when a different hydrogen user who mainly uses Green hydrogen (e.g., hydrogen user B) places an order for purchasing Gray hydrogen as a part of a Gray hydrogen/Green hydrogen mixture for the purpose of improving the economic value of hydrogen, a required amount of payment is taken out of the difference resulting from a past trading and is given to the hydrogen supplier B (Green hydrogen supplier). In this manner, the final amount of payment to each hydrogen supplier is determined (adjusted) based on the total amount of hydrogen supply by the hydrogen supplier. Each hydrogen supplier, therefore, does not suffer any loss.

### <Management Information in Hydrogen Trading Coordination Device>

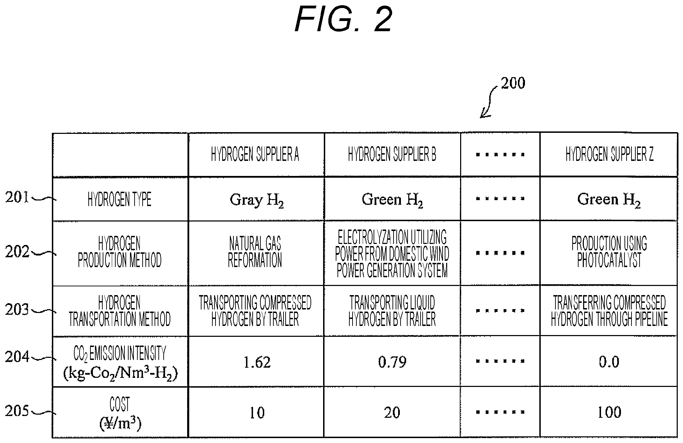

FIG. 2 depicts a configuration example of hydrogen management information 200 held (managed) in a storage device (not illustrated) of the hydrogen trading coordination device 100. FIG. 2 shows an example in which the hydrogen management information 200 is managed in the form of a table. The hydrogen management information 200, however, may be managed in a non-table form, providing that pieces of information making up the hydrogen management information 200 are correlated with each other.

The hydrogen management information 200 includes pieces of configuration information on each hydrogen supplier, the pieces of configuration information being hydrogen type 201, hydrogen production method 202, hydrogen transportation method 203, CO₂ emission intensity 204, and cost 205.

Hydrogen type 201 is information indicating types of hydrogen, such as Gray hydrogen, Low Carbon hydrogen, and Green hydrogen. In Europe, Green hydrogen and Low Carbon hydrogen are collectively referred to as premium hydrogen, which is hydrogen with a CO₂ emission intensity (kg-CO₂/Nm³-H₂) of 36.4 or less. Gray hydrogen is hydrogen with a CO₂ emission intensity higher than 36.4. Natural gas reformation hydrogen (with a CO₂ emission intensity of 91) is classified into the Gray hydrogen category.

Hydrogen production method 202 is information indicating a method by which hydrogen is produced (including information on energy used in the production process). Various hydrogen production methods are known, which include, for example, a method of reforming a fossil fuel (petroleum, natural gas, or the like) using a catalyst or the like, a method of producing hydrogen by electrolyzing water using electricity generated by systems utilizing natural energy (solar power, wind power, or the like), a method of producing hydrogen by purifying a by-product gas, which is a by-product from steel mills, chemical factories, or the like, a method of reforming a methanol or methane gas using a catalyst or the like, the gas being created from biomass, a method of producing hydrogen using a photocatalyst capable of extracting hydrogen by itself when exposed to sunlight, and a method of producing hydrogen through an IS process.

Hydrogen transportation method 203 is information indicating a method by which hydrogen is transported from each hydrogen supplier to each hydrogen user's facility. Various hydrogen transportation methods are known, which include, for example, a method of transporting compressed hydrogen by trailer, a method of transporting liquid hydrogen by trailer, and a method of transferring compressed hydrogen through a pipeline. A transportation method is determined according to the form of hydrogen each hydrogen supplier produces (compressed hydrogen or liquid hydrogen) or the type of a storage facility of each hydrogen user.

CO₂ emission intensity 204 is information indicating an amount of CO₂ emitted by each hydrogen production method. CO₂ emission intensity 204 may be calculated as an amount of CO₂ emission including an amount of CO₂ emitted by a transportation method.

Cost 205 is information indicating a production cost (or a sales price) per 1 m³. The production cost is the lowest when a fossil fuel is used, and tends to rise in a case where a power generation facility or initial investment is expensive or high (e.g., power generation utilizing natural energy or a photocatalyst). When a sales price is referred to as the production cost, the sales price actually includes a transportation cost and a hydrogen supplier's profit, in addition to the production cost.

The hydrogen trading coordination device 100 may also manage other kinds of information. It may manage pieces of information on each hydrogen user (a location, a past purchase history, a storage facility type, or the like) by saving the information in a storage device or manage a certificate issued by each hydrogen supplier by associating the certificate with information of each hydrogen user and each hydrogen supplier and saving the associated certificate in the storage device. In response to an incoming certificate issuance request from the terminal device 101_k (k = 1, 2,... n) of a hydrogen user, the hydrogen trading coordination device 100 may send related certificate data to the terminal device 101_k. Each hydrogen user having received a certificate, for example, is able to use the certificate for economic activities, such as CO₂ emission right trading.

Although not shown in FIG. 2, the hydrogen trading coordination device 100 may further save additional information on each hydrogen supplier, the additional information being different from items of information 201 to 205, in the storage device (not illustrated). The additional information include information on a hydrogen production capacity (e.g., a production volume per day), on a hydrogen shipment volume (e.g., shipment volume per day), and on a hydrogen shipment time.

### <Details of Hydrogen Trading Coordination Process>

FIG. 3 is a flowchart for explaining the details of a hydrogen trading coordination process executed by the hydrogen trading coordination system 10. At each of steps shown below, the processor, i.e., controller (not illustrated) of the hydrogen trading coordination device 100 mainly works as an operation subject. In the following description, however, the operation subject is simply referred to as the hydrogen trading coordination device 100 (in a case of each terminal device being the operation subject, the "processor (controller)" is omitted from the description as in the case of the hydrogen trading coordination device 100).

### (i) Step 301

The hydrogen trading coordination device 100 receives an order for purchasing Green hydrogen to be mixed with Gray hydrogen, the order being placed by a Gray hydrogen user, from the terminal device 101_k of the Gray hydrogen user. Forms of such an order for purchasing Green hydrogen to be mixed with Gray hydrogen, as described above, include a form of changing the CO₂ emission intensity, for example, from X to Y (e.g., from 1.62 kg-CO₂/Nm³-H₂ to 1.2 kg-CO₂/Nm³-H₂) and a form of directly specifying an amount of Gray hydrogen and of Green hydrogen (e.g., 10 m³ of Gray hydrogen and 10 m³ of Green hydrogen).

### (ii) Step 302

The hydrogen trading coordination device 100 calculates a purchase price, based on the order received at step 301. Specifically, the hydrogen trading coordination device 100 acquires information of a regular hydrogen supplier from which the Gray hydrogen user (orderer) usually purchases hydrogen (a hydrogen supplier to which a transportation distance is as short as possible is usually chosen but is not necessarily to be such), which information may be saved as registration information or included in the order, and acquires information of the cost of Gray hydrogen and of a Green hydrogen supplier and the cost of Green hydrogen, referring to the hydrogen management information 200. When the order is of the form of directly specifying an amount of Gray hydrogen and of Green hydrogen, the hydrogen trading coordination device 100 calculates a purchase price from the order amount and the cost of Gray hydrogen and of Green hydrogen. When the order is of the form of changing the CO₂ emission intensity, the hydrogen trading coordination device 100 calculates the purchase amount and purchase cost of Gray hydrogen and of Green hydrogen, based on information on the CO₂ emission intensity of the Gray hydrogen supplier and the CO₂ emission intensity of the Green hydrogen supplier supplying Green hydrogen to mixed with Gray hydrogen, and on information on the cost of Gray hydrogen and of Green hydrogen. Subsequently, the hydrogen trading coordination device 100 transmits the calculated purchase cost, information on the Gray hydrogen supplier, information on the Green hydrogen supplier, and information on the purchase amount of Gray hydrogen and of Green hydrogen, to the terminal device 101_k of the hydrogen user (orderer).

The hydrogen trading coordination device 100 may execute a process of checking the amount of Green hydrogen based on the received order against at least one of pieces of information on the production capacity, the shipment volume, and the shipment time of the Green hydrogen supplier (e.g., hydrogen supplier B), who is a trading partner, and determining whether the Green hydrogen supplier can handle the order. When the Green hydrogen supplier cannot handle the order, the hydrogen trading coordination device 100 may send a notice of the trading being impossible (of the order being not processable and the reasons therefor) to the terminal device of the hydrogen user having placed the order (the terminal device 101_1 of the hydrogen user A). As a result, the Green hydrogen supplier does not supply Green hydrogen. Nevertheless, this approach allows trading practice based on an actual amount of hydrogen that can be supplied, thus allowing prevention of illegal acts. In addition, when a single hydrogen supplier is not able to handle the order, the hydrogen trading coordination device 100 may further check the production capacity and the shipment volume, and the like of other Green hydrogen suppliers (e.g., Green hydrogen suppliers C, D and so on) and send a message to the terminal device of the hydrogen user, the message inquiring whether the hydrogen user has an intention of making a trading with one or more other hydrogen suppliers capable of handling the order. This inquiry message allows confirming whether the hydrogen user still has an intention of purchasing hydrogen when the purchase price turns out to be higher than an expected purchase price.

### (iii) Step 303

The hydrogen trading coordination device 100 generates purchase item data corresponding to the order and stores the purchase item data in a storage device. The purchase item data may include, for example, information on a purchase date, information on the hydrogen user who is the orderer, a ratio between Gray hydrogen and Green hydrogen, the hydrogen user's hydrogen storage facility, the regular hydrogen supplier from which hydrogen is usually purchased (the regular hydrogen supplier from which hydrogen that is not a mix of different types of hydrogen is purchased), the price to pay for the order (calculated amount of payment), a Gray hydrogen supplier and a Green hydrogen supplier who are written on a trading certificate based on the order (as mentioned above, the hydrogen user is actually supplied with a desired amount of hydrogen from a supplier from which the hydrogen user has been purchasing hydrogen), a difference between the price to pay for the order and an amount of payment to the hydrogen supplier who actual supplies hydrogen, and information indicating to which hydrogen supplier the difference should be paid in future.

### (iv) Step 304

The hydrogen trading coordination device 100 pays an amount of money calculated by trading coordination, to the regular hydrogen supplier (e.g., the Gray hydrogen supplier A) of the hydrogen user (e.g., the hydrogen user A), as the purchase price (by, for example, electronic settlement), and sends an instruction to supply the hydrogen user with hydrogen (e.g., compressed hydrogen), to the terminal device 102_k of the regular hydrogen supplier (hydrogen supplier A 102_1). Receiving the instruction to supply hydrogen, the hydrogen supplier transports hydrogen (e.g., Gray hydrogen of 20 m³) of which the amount is equivalent to the order amount of the hydrogen user (overall order amount sent to the hydrogen trading coordination device 100, i.e., 20 m³), to the orderer (hydrogen user A).

### (v) Step 305

The hydrogen trading coordination device 100 sends order information to a new hydrogen supplier or a hydrogen supplier used for hydrogen trading coordination (e.g., the Green hydrogen supplier B) that is different from the regular hydrogen supplier (e.g., the Gray hydrogen supplier A) the orderer has regular business dealings with, and instructs the new hydrogen supplier or the hydrogen supplier used for hydrogen trading coordination to issue a trading certificate (document certifying purchase of Green hydrogen). Following the instruction, the hydrogen supplier (e.g., hydrogen supplier B) creates a Green hydrogen certificate (carrying information of a trading date, a hydrogen supplier, a hydrogen purchaser, an amount of Green hydrogen supplied, and the like), and sends the certificate to the hydrogen trading coordination device 100.

When a hydrogen user who usually purchases Green hydrogen only (e.g., the hydrogen user B) decides to purchase Green hydrogen as a part of Green hydrogen/Gray hydrogen mixture for the purpose of increasing the economic value of hydrogen, the amount of Green hydrogen to purchase may become smaller than the usual amount of purchase of Green hydrogen. Nevertheless, as in the case of the Gray hydrogen user's purchasing Green hydrogen, the Green hydrogen supplier (the supplier the orderer (hydrogen user B) has regular business dealings with, e.g., the hydrogen supplier B) creates a Green hydrogen certificate by following an instruction from the hydrogen trading coordination device 100, and sends the certificate to the hydrogen trading coordination device 100.

### (vi) Step 306

The hydrogen trading coordination device 100 sends the certificate received from the Green hydrogen supplier (hydrogen supplier B), to the terminal device of the orderer (the terminal device 101_1 of the hydrogen user).

### (vii) Step 307

The hydrogen trading coordination device 100 stores data of a price difference resulting from the hydrogen trading, in the storage device. The price difference data may be stored as data associated with information on the hydrogen user (hydrogen user A) and the hydrogen suppliers (hydrogen suppliers A and B) involved in the trading.

### (viii) Step 308

The hydrogen trading coordination device 100 waits for an order from a Green hydrogen user (e.g., the hydrogen user B) for purchasing Gray hydrogen as a part of a Green hydrogen/Gray hydrogen mixture. When such an order is placed (Yes at step 308), the process flow proceeds to step 309.

### (ix) Step 309

The hydrogen trading coordination device 100 processes the received order from the Green hydrogen user (hydrogen user B), and adjusts the price difference stored in the storage device at step 307.

It should be noted that processes to meet the Green hydrogen user's order is reverse to processes from step 302 to step 306. Specifically, it is said from a perspective of physical supply that the Green hydrogen user is supplied with an ordered amount of hydrogen from a Green hydrogen supplier (e.g., hydrogen supplier B) from which the Green hydrogen user has been purchased hydrogen. It is also said, however, from a perspective of trading coordination data that the Green hydrogen user purchases Gray hydrogen from a Gray hydrogen supplier (e.g., the hydrogen supplier A) in a given amount and purchases Green hydrogen from the Green hydrogen supplier (hydrogen supplier B) in an amount = order amount - Gray hydrogen amount. In this case, a purchase price the Green hydrogen user is to pay is lower than a purchase price for the case (normal case) of purchasing Green hydrogen only. Meanwhile, the Green hydrogen supplier (hydrogen supplier B) actually supplies hydrogen larger in amount than Green hydrogen corresponding in purchase price to the Green hydrogen user's payment to the hydrogen trading coordination device 100 (hydrogen trading coordinator). However, the price for a surpass portion of hydrogen supplied will be compensated by a price difference resulting from a different hydrogen trading. In this case, because the Gray hydrogen supplier (hydrogen supplier A) actually supplies no Gray hydrogen to the Green hydrogen user (hydrogen user B), the Gray hydrogen supplier is not paid for the order made in this trading. However, as described above, the Gray hydrogen supplier too is compensated for a surpass portion of hydrogen supply made in a past hydrogen trading with a price difference resulting from a different trading.

Adjustment of the price difference is made, for example, in a certain period (e.g., one year) such that none of the hydrogen suppliers suffers any loss.

### <Summary>

(i) In the present embodiment, Gray hydrogen (first type fuel) and Green hydrogen (second type fuel) are fuels that are different in production method but can be used for the same purpose. The hydrogen (fuel) trading coordination device sends order information received from the terminal device of a Gray hydrogen user, to a Gray hydrogen supplier (the first supplier who supplies the first type fuel) and to a Green hydrogen supplier (the second supplier that supplies the second type fuel). Through this process, when the Gray hydrogen user places an order for purchasing a mix of Gray hydrogen and Green hydrogen (the total purchase price is the sum of the price of Gray hydrogen and the price of Green hydrogen), the Gray hydrogen user is able to receive the whole amount of hydrogen ordered from the Gray hydrogen supplier while making a pseudo transaction of receiving hydrogen supply from the Green hydrogen supplier.

In this case, the hydrogen trading coordination device sends a payment (price) based on the amount of supply of Gray hydrogen corresponding to the order, to the first supplier, and instructs the first supplier to supply Gray hydrogen in the amount corresponding to the total amount of hydrogen specified in the order, that is, the sum of Gray hydrogen and Green hydrogen. This allows the Gray hydrogen user to receive supply of Green hydrogen in a pseudo transaction without a need of changing a hydrogen storage facility the Gray hydrogen user has been using (no burden of facility remodeling).

Meanwhile, the hydrogen trading coordination device instructs the second supplier to issue a certificate certifying that the second supplier has supplied Green hydrogen, and sends data of the issued certificate to the terminal device of the Gray hydrogen user having placed the order. The data of the certificate can be used for the CO₂ emission right trading in the future by the Gray hydrogen user.

In addition, the hydrogen trading coordination device processes orders from users of various types of hydrogen, and stores information on past orders from a plurality of Gray hydrogen users and on past orders from a plurality of Green hydrogen users, in a storage device. By managing such past order information, an amount of hydrogen available to each user can be determined (estimated) from order-placing histories. This allows the hydrogen trading coordination device to take a specific measure, such as making inquiries to hydrogen suppliers, when dealing with an order for hydrogen of which the amount exceeds an estimated order amount, thus allowing prevention of illegal acts.

The storage device of the hydrogen trading coordination device stores information on a plurality of fuel suppliers, the information including information of a production method for hydrogen, a production capacity for the hydrogen, and the form of transportation of the hydrogen, information of the CO₂ emission intensity of the hydrogen, information of the sales price of the hydrogen, information of a shipment volume, and information on a shipment time. The hydrogen trading coordination device checks the amount of Green hydrogen based on the order against information of shipment volumes and shipment times of a plurality of hydrogen suppliers, determines whether hydrogen can be shipped out to meet the order, and when hydrogen cannot be shipped out, sends a notice of meeting the order being impossible, to the terminal device of the Gray hydrogen user having placed the order. This process prevents conduct of an illegal act in pseudo Green hydrogen trading transactions.

When the order from the Gray hydrogen user is of the form of intending to reduce a CO₂ emission intensity value to a desired value, the hydrogen trading coordination device calculates an order amount of Gray hydrogen and of Green hydrogen, based on the desired CO₂ emission intensity value, and sends order information including information of the order amounts, to the first supplier and to the second supplier. This allows the hydrogen user to place an order without specifying an amount of each type of hydrogen, thus reducing burden on the hydrogen user. That said, the order may be placed in the form of specifying a purchase amount of Gray hydrogen and of Green hydrogen. In such a case, the hydrogen trading coordination device sends the order information including information on the purchase amount of Gray hydrogen and of Green hydrogen, to the first supplier and to the second supplier. This reduces a calculation load on the hydrogen trading coordination device.

(ii) The functions of this embodiment can be implemented by a software program code. In this case, a storage medium recording the program code therein is incorporated in a system or a device, and a computer (or a CPU or MPU) of the system or the device reads the program code stored in the storage medium. In this case, the program code itself, which is read out of the storage medium, implements the above functions of the embodiments, and the program code and the storage medium storing the program code constitute the present disclosure. Various storage media for supplying such a program code are used, which include, for example, a flexible disk, a CD-ROM, a DVD-ROM, a hard disk, an optical disk, a magneto-optical disk, a CD-R, a magnetic tape, a nonvolatile memory card, and a ROM.

In another case, an operating system (OS) or the like running on a computer may execute a part or the whole of an actual process, based on an instruction from the program code, to implement the above functions of the embodiments through the process. In still another case, after the program code read out of the storage medium is written to a memory on the computer, the CPU or the like of the computer may execute a part or the whole of the actual process, based on an instruction from the program code, to implement the above functions of the embodiments through the process.

Furthermore, the software program code that implements the functions of the embodiment may be distributed via a network to store the program code in a storage means, such as a hard disk or a memory of the system or the device, or in a storage medium, such as a CD-RW or a CD-R, so that when the program code is used, the computer (or the CPU or MPU) of the system or the device reads the program code out of the storage means or the storage medium to execute the program code.

In the above embodiment, a group of control lines/data lines considered to be necessary for description are illustrated, and all control lines/information lines making up the product are not always illustrated. All constituent elements may be interconnected.

### Reference Signs List

- 10: hydrogen trading coordination system
- 100: hydrogen trading coordination device
- 101_1 to 101_n: terminal devices of hydrogen users A to Z
- 102_1 to 102_n: terminal devices of hydrogen suppliers A to Z
- 103: network
- 200: hydrogen management information
- 201: hydrogen type
- 202: hydrogen production method
- 203: hydrogen transportation method
- 204: CO₂ emission intensity
- 205: cost

## Claims

1. A fuel trading coordination device comprising:
a storage device storing information of a plurality of fuel suppliers; and
a controller that processes an order for purchasing a mix of a first type fuel and a second type fuel, the order being placed by a first type fuel user, wherein
the first type fuel and the second type fuel are fuels that are different in production method but can be used for the same purpose, and wherein
the controller sends information of the order of the first type fuel user to a first supplier that supplies the first type fuel and to a second supplier that supplies the second type fuel.

2. The fuel trading coordination device according to claim 1, wherein
the controller sends a payment based on an amount of supply of the first type fuel, the amount of supply corresponding to the order, to the first supplier, and instructs the first supplier to supply the first type fuel in an amount corresponding to a total amount of fuel that is a sum of the first type fuel and the second type fuel in the order.

3. The fuel trading coordination device according to claim 2, wherein
the controller instructs the second supplier to issue a certificate certifying that the second supplier has supplied the second type fuel.

4. The fuel trading coordination device according to claim 3, wherein
the controller sends data of the certificate to a terminal device of the first type fuel user who has placed the order.

5. The fuel trading coordination device according to claim 1, wherein
the controller processes orders from users of various types of hydrogen, and stores information on past orders from a plurality of first type fuel users and on past orders from a plurality of second type fuel users, in the storage device.

6. The fuel trading coordination device according to claim 1, wherein
the storage device stores information on the plurality of fuel suppliers, the information including information of a production method for a fuel, a production capacity for the fuel, and a form of transportation of the fuel, information of a CO₂ emission intensity of the fuel, information of a sales price of the fuel, information of a shipment volume, and information of a shipment time.

7. The fuel trading coordination device according to claim 6, wherein
when the order is of a form of intending to reduce a CO₂ emission intensity value to a desired value, the controller calculates an order amount of the first type fuel and an order amount of the second type fuel, based on the desired CO₂ emission intensity value, and sends information of the order including information of the order amounts, to the first supplier and to the second supplier.

8. The fuel trading coordination device according to claim 6, wherein
when the order is of a form of specifying a purchase amount of each type of fuel, the controller sends information of the order including information on a purchase amount of the first type fuel and a purchase amount of the second type fuel, to the first supplier and to the second supplier.

9. The fuel trading coordination device according to claim 6, wherein
the controller checks an amount of the second type fuel based on the order against information of the shipment volumes and the shipment times of the plurality of hydrogen suppliers, determines whether hydrogen can be shipped out to meet the order, and when hydrogen cannot be shipped out, sends a notice of meeting the order being impossible, to the terminal device of the first type fuel user having placed the order.

10. The fuel trading coordination device according to claim 1, wherein
the first type fuel is Gray hydrogen and the second type fuel is Green hydrogen.

11. A fuel trading coordination system comprising:
the fuel trading coordination device according to claim 1;
terminal devices of a plurality of fuel suppliers; and
terminal devices of a plurality of fuel users, wherein
the fuel trading coordination device, the terminal devices of the plurality of fuel suppliers, and the terminal devices of the plurality of fuel users are connected via a network to allow mutual communication.
